# FASCICULE DE BREVET EUROPEEN

(11) **EP 2 048 407 B1**
(45) Date de publication et mention de la délivrance du brevet: **03.11.2010**
(21) Numéro de dépôt: 08360028.8
(22) Date de dépôt: 05.09.2008
(51) Int. Cl.: F16F 7/12, B60R 19/34

(54) **Ensemble absorbeur d'énergie amélioré pour véhicule à moteur, comprenant un tube en matière plastique forcé à travers un support de rainurage préférentiellement réalisé par emboutissage**
Verbesserte Energieabsorptionseinheit für ein Motorfahrzeug, die ein Plastikrohr umfasst, welches durch eine Rillenhalterung geführt wird, die bevorzugt durch Tiefziehen hergestellt wird
Improved energy-absorber assembly for a motor vehicle, comprising a plastic tube forced through a grooving support preferably made by stamping

(30) Priorité: 08.10.2007 FR 0707041
(43) Date de publication de la demande: 15.04.2009
(73) Titulaire: Rehau SA, 57340 Morhange (FR)
(72) Inventeur: Pennerath, Eddy, 57450 Henriville (FR)
(74) Mandataire: Metz, Paul

(56) Documents cités:
- EP-A- 1 486 381
- DE-A1- 10 145 446
- DE-A1- 10 243 460

## Description

La présente invention concerne un ensemble absorbeur d'énergie cinétique amélioré pour un véhicule à moteur, notamment automobile. Cet ensemble absorbeur d'énergie comprend un tube absorbeur en matière plastique forcé en avancement à travers un support métallique de rainurage réalisé préférentiellement d'une seule pièce par emboutissage.

Les véhicules automobiles sont équipés à l'avant comme à l'arrière de boucliers, également appelés pare-chocs, dont la fonction principale est, en cas de choc à faible vitesse, d'encaisser le choc sans dommage afin de protéger le véhicule, et, en cas de choc à vitesse plus importante, de dissiper tout ou partie de l'énergie cinétique du choc en se déformant pour éviter qu'elle ne soit totalement transmise à l'habitacle où se trouvent les passagers.

Dans ce but, la plupart des véhicules actuels comportent également des dispositifs absorbeurs d'énergie cinétique disposés à l'arrière de leur bouclier permettant d'absorber une partie de l'énergie cinétique du véhicule en cas de collision.

Ces dispositifs absorbeurs d'énergie sont complétés par des zones de déformation croissante situées à différents endroits du véhicule, notamment au niveau de la tôle de carrosserie et des longerons de structure, afin qu'en cas de choc la totalité ou un maximum de l'énergie cinétique soit dissipé avant d'arriver à l'habitacle, protégeant ainsi les passagers et évitant des dégâts importants au véhicule.

Pour être retenus par les constructeurs automobiles, ces dispositifs absorbeurs d'énergie cinétique doivent satisfaire un grand nombre d'exigences, concernant leur efficacité technique, notamment leur temps de réponse et la quantité d'énergie dissipée en fonction de la vitesse de collision et de l'angle d'impact, mais concernant également leur encombrement, leur poids, leur facilité de montage et de remplacement, leur stabilité aux conditions climatiques et surtout leur prix de revient.

De nombreux systèmes ont été proposés dans l'art antérieur, mais pour l'instant aucun n'est satisfaisant sur l'ensemble de ces critères.

On connaît ainsi par exemple des dispositifs amortisseurs hydrauliques, des dispositifs absorbeurs à structure déformable, notamment sous la forme de nids d'abeilles, de soufflet ou d'un tube métallique éventuellement rempli de mousse d'aluminium, des dispositifs basés sur un alliage à mémoire de forme, etc...

Un autre dispositif absorbeur d'énergie a été divulgué dans la demande de brevet DE 102 43 460 au nom de REHAU= AG.

Ce dispositif comprend un tube en matière plastique solidarisé à l'arrière du bouclier. Il comprend également une platine métallique de rainurage fixée aux longerons du châssis du véhicule par l'intermédiaire d'un rebord de la platine.

Cette platine métallique est percée d'une ouverture centrale de forme générale circulaire dont le diamètre correspond au diamètre extérieur du tube en matière plastique de façon à pouvoir emmancher la platine sur le tube en matière plastique. Le bord de l'ouverture centrale présente des dents s'étendant en saillie vers l'intérieur de l'ouverture.

En position de montage, le tube en matière plastique est placé devant l'ouverture de la platine métallique. Lors d'une collision contre le bouclier du véhicule, le tube en matière plastique est forcé longitudinalement à travers l'ouverture centrale de la platine. Lors de ce mouvement les dents de la platine arrachent des copeaux de matière plastique à la surface du tube, dissipant par cette opération de rainurage une grande quantité d'énergie cinétique.

Afin d'améliorer le guidage du mouvement d'avancée longitudinale du tube en matière plastique à travers l'ouverture de la platine métallique lors d'un choc, un manchon tubulaire de guidage, solidarisé à l'avant de la platine, peut être optionnellement prévu.

Bien que très intéressant du point de vue théorique, ce système divulgué depuis plusieurs années n'a jamais été commercialisé du fait de plusieurs inconvénients structurels et d'un coût de fabrication élevé.

En effet, la version de base de ce système, qui ne comporte pas de manchon de guidage, ne fonctionne pas correctement dans la pratique. Sans guidage, le rainurage du tube en matière plastique ne se fait pas correctement si l'effort de poussée n'est pas parfaitement longitudinal.

Or dans la majorité des cas, le choc est incliné par rapport à l'axe longitudinal du tube et génère un effort de poussée oblique. Du coup, certaines dents pénètrent trop profondément dans le tube et découpent jusqu'à l'insert de renfort se trouvant à l'intérieur du tube en matière plastique. Souvent, le tube en matière plastique se déchire, ce qui bloque tout le système. Dans tous les cas, un effort constant de découpe ne peut être garanti sur toute la course du tube. L'absorption d'énergie n'est donc pas optimale.

La variante de ce dispositif comportant un manchon de guidage à l'avant de la platine, fonctionne mieux d'un point de vue pratique. Cependant, pour que le guidage soit correctement réalisé, le manchon doit être de longueur suffisante, soit au moins de 40 à 50 mm de long.

Lors d'un choc, ce manchon, situé à l'avant de la platine, constitue une butée pour la poutre du bouclier et marque la fin de l'avancée du tube à travers la platine de rainurage et donc la fin de l'absorption d'énergie. Par rapport à la variante de base, la présence de ce manchon diminue la course efficace du tube en matière plastique et donc la quantité d'énergie pouvant être absorbée.

Pour obtenir un système de capacité équivalente, il est nécessaire de rallonger l'ensemble du dispositif de la longueur du manchon de guidage. On obtient alors un ensemble d'absorption beaucoup plus encombrant qui n'est pas compatible avec les objectifs de gain de place imposés par les constructeurs automobiles.

Malgré un principe d'absorption d'énergie intéressant, le dispositif obtenu en fin de compte ne fonctionne pas correctement ou présente un encombrement supérieur à celui des autres systèmes connus sur le marché.

Le but de l'invention est de perfectionner le dispositif antérieur décrit dans la demande DE 102 43 460 afin de fournir un ensemble absorbeur amélioré plus avantageux et pouvant être fabriqué de façon économique et tout à fait compétitive.

L'invention enseigne pour cela une forme modifiée plus compacte, tout en assurant un guidage satisfaisant du tube absorbeur en matière plastique. Elle enseigne également un procédé de fabrication économique de cet ensemble absorbeur amélioré.

Par ce perfectionnement, la présente invention rend attractif et compétitif le dispositif antérieur. Elle rend ainsi possible son développement industriel et commercial, et par suite permet à tous de bénéficier d'un système de très grande efficacité, supérieur aux autres dispositifs présents sur le marché.

Pour résoudre ce problème technique, l'invention fournit un ensemble absorbeur d'énergie cinétique pour véhicule à moteur, notamment automobile, comprenant un tube absorbeur dont une couche extérieure au moins est en matière plastique et un support de rainurage métallique portant des éléments de rainurage.

Le tube absorbeur est solidarisé à une pièce susceptible de recevoir un choc dont on veut absorber l'énergie cinétique et le support de rainurage est solidarisé à un élément de structure à extrémité creuse du véhicule.

Le tube absorbeur et le support de rainurage sont disposés de façon qu'en cas de choc longitudinal, le tube absorbeur soit forcé en avancement à travers une ouverture centrale du support de rainurage et que les éléments de rainurage arrachent des copeaux de matière plastique à la surface du tube absorbeur, dissipant par cette opération de rainurage au moins une partie de l'énergie cinétique du choc.

Selon l'invention, le support de rainurage comprend :
- une platine destinée à être solidarisée à l'extrémité de l'élément de structure et comportant une ouverture centrale, et
- un manchon tubulaire de guidage, qui s'étend à l'arrière de la platine afin d'être logé à l'intérieur de l'extrémité creuse de l'élément de structure ; dont le volume intérieur creux se trouve dans le prolongement de l'ouverture centrale de la platine ; et dont la paroi latérale présente une série de saillies longitudinales s'étendant longitudinalement dans son volume intérieur, ces saillies longitudinales constituant les éléments de rainurage du support de rainurage.

L'extrémité arrière du tube absorbeur est initialement engagée à travers l'ouverture centrale et dans le manchon tubulaire de guidage du support de rainurage.

En cas de choc longitudinal ou incliné, le tube absorbeur est forcé en avancement à travers l'ouverture centrale puis le manchon tubulaire de guidage du support de rainurage, les saillies longitudinales arrachant des copeaux de matière plastique et creusant des cannelures longitudinales dans la paroi latérale du tube absorbeur.

En outre, la paroi latérale du manchon tubulaire de guidage se trouve en contact de guidage avec sensiblement toute la surface extérieure de la paroi latérale de la portion du tube absorbeur engagée dans le manchon tubulaire de guidage et exerce ainsi un guidage serré de l'avancée du tube absorbeur.

Selon une application préférentielle de l'invention, l'ensemble absorbeur d'énergie cinétique selon l'invention peut être monté à l'arrière d'un bouclier de véhicule, le tube absorbeur étant solidarisé à la poutre du bouclier et le support de rainurage à un longeron de châssis du véhicule.

L'invention n'est cependant pas limité à une telle application, l'ensemble absorbeur d'énergie cinétique selon l'invention pouvant être monté par exemple sur une charnière du capot moteur ou au niveau de l'armature interne d'un siège du véhicule.

Contrairement à celui de l'art antérieur, l'ensemble absorbeur selon l'invention est efficace même lorsque l'axe du choc est oblique et n'est pas entièrement longitudinal, du fait d'un guidage particulièrement efficace exercé par le manchon de guidage qui épouse complètement la forme de la paroi latérale de la portion de tube absorbeur engagée dans le manchon tubulaire de guidage.

L'ensemble absorbeur selon l'invention est en outre beaucoup plus compact et permet de gagner du volume à l'intérieur du véhicule, car le manchon de guidage, situé à l'arrière de la platine, est logé dans l'extrémité creuse d'un élément de structure du véhicule, par exemple l'extrémité creuse d'un longeron.

D'autre part, la course utile du tube absorbeur est maximale et l'effort de coupe est constant sur toute cette course, ce qui permet d'obtenir une absorption d'énergie maximale.

L'invention fournit en outre un procédé de fabrication économique d'un tel ensemble absorbeur d'énergie cinétique selon lequel le support de rainurage est réalisé d'une seule pièce, préférentiellement par emboutissage à partir d'un flan de tôle.

De préférence, l'opération de fabrication du support de rainurage comprend les étapes suivante :
- déformation d'un flan de tôle par emboutissage pour lui conférer la forme générale d'un pot cylindrique ;
- formation des saillies longitudinales par déformation et cisaillement localisé de la paroi latérale du pot cylindrique ;
- découpe du fond du pot cylindrique ; et
- découpe par poinçonnage du bord de la platine et de ses éventuelles ouvertures de fixation.

D'autres caractéristiques et avantages de l'invention apparaîtront à la lecture de la description détaillée qui va suivre, description faite en référence aux dessins annexés, dans lesquels :
- la figure 1 est une vue générale schématique d'un ensemble absorbeur d'énergie selon l'invention, monté en position d'utilisation à l'arrière du bouclier d'un véhicule à moteur, avant qu'une collision se produise ;
- la figure 2 est une vue générale schématique similaire à celle de la figure 1, mais après qu'une collision se soit produite ;
- la figure 3 est une vue en perspective d'un ensemble absorbeur d'énergie selon l'invention avant collision ;
- la figure 4 est une vue en perspective d'un ensemble absorbeur d'énergie selon l'invention après collision ;
- la figure 5 est une vue en perspective d'un tube absorbeur d'un ensemble absorbeur d'énergie selon l'invention, représenté seul ;
- la figure 6 est une vue arrière en perspective d'un support de rainurage d'un ensemble absorbeur d'énergie selon l'invention, représenté seul ;
- la figure 7 est une vue avant en perspective d'un support de rainurage selon l'invention ;
- la figure 8 est une vue plane de la face arrière d'un support de rainurage selon l'invention ;
- la figure 9 est un agrandissement du détail encerclé de la figure 8 ;
- la figure 10 est une vue en coupe longitudinale, réalisée selon le plan de coupe X-X de la figure 8, d'un support de rainurage selon l'invention ;
- les figures 11 à 23 sont des vues schématiques en coupe, respectivement longitudinale pour les figures 11 à 14, 16, 18, 20, 22 et 23 et transversale pour les figures 15, 17, 19 et 21, représentant les différentes étapes d'un procédé de fabrication du support de rainurage d'un ensemble absorbeur d'énergie selon l'invention,

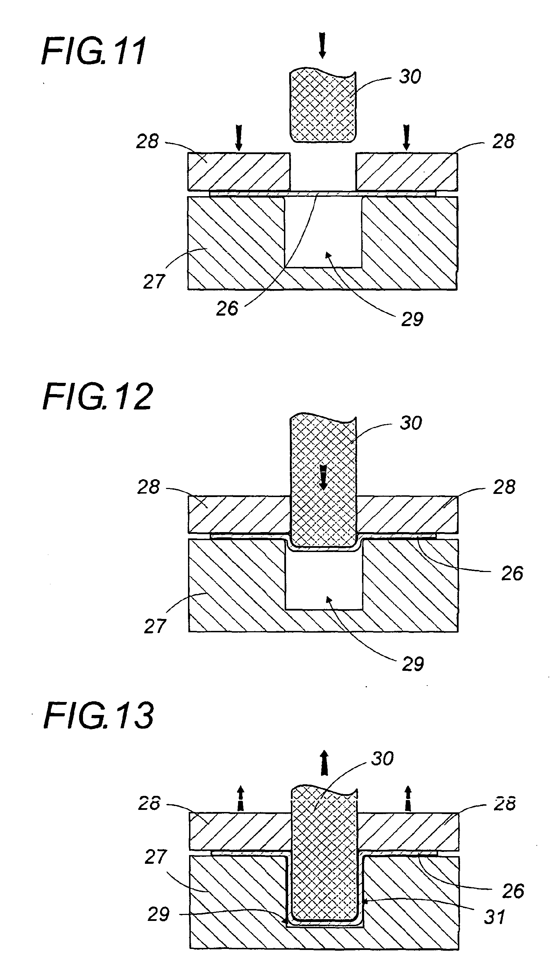

   - les figures 11 à 13 illustrant l'opération d'emboutissage,
   - les figures 13 à 19 illustrant l'opération de formation des éléments de rainurage par déformation et cisaillement ;

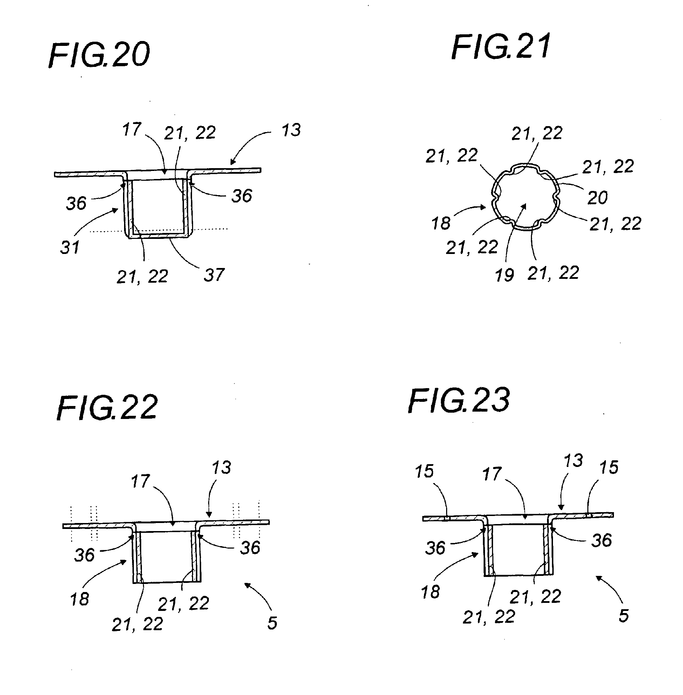

   - les figures 20 et 21 illustrant l'étape de découpe du fond ;
   - la figure 22 représentant schématiquement la découpe de la platine par poinçonnage ; et
   - la figure 23 représentant le support de rainurage obtenu à la fin du procédé de fabrication.

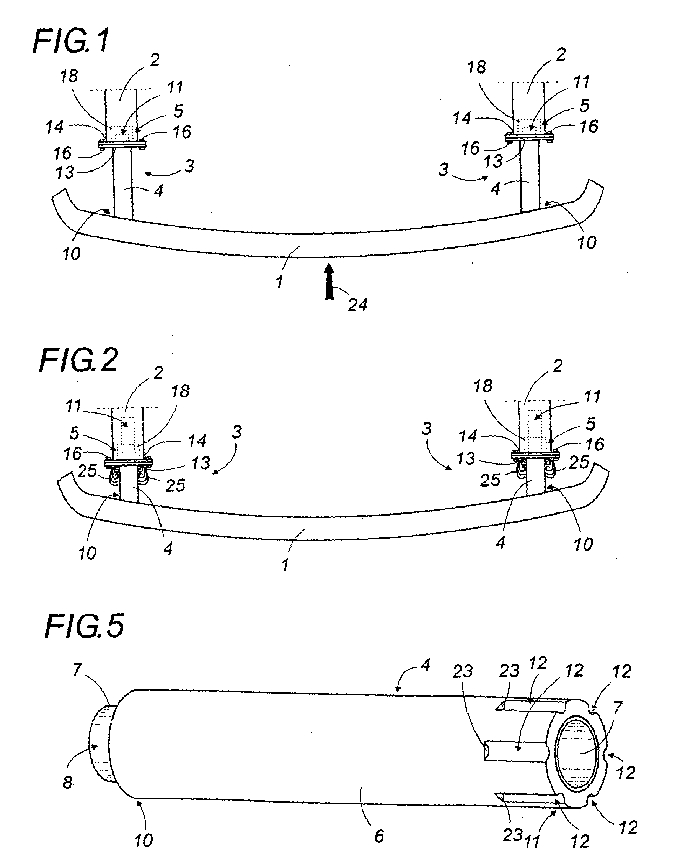

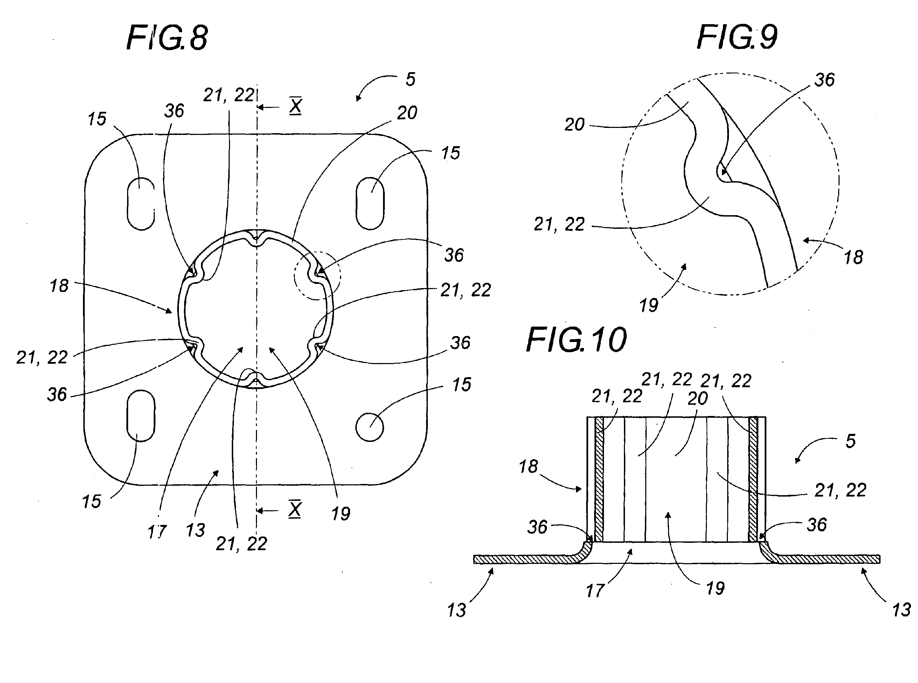

L'ensemble absorbeur d'énergie selon la présente invention va maintenant être décrit de façon détaillée en référence aux figures 1 à 23. Les éléments équivalents représentés sur les différentes figures porteront les mêmes références numériques.

On définira dans la suite de cette description la face avant du dispositif comme étant celle destinée, en situation d'utilisation, à être dirigée en direction de la pièce susceptible de recevoir un choc, par exemple en direction du bouclier du véhicule. Les autres directions seront définies en conséquence.

Les figures annexées, ainsi que la suite de cette description se rapportent à une application préférentielle de l'invention dans laquelle l'ensemble absorbeur d'énergie cinétique est monté à l'arrière d'un bouclier de véhicule, entre la poutre de ce bouclier et un longeron de structure du véhicule.

Il doit cependant être bien compris que l'invention n'est absolument pas limitée à cette application, l'homme du métier pouvant en imaginer beaucoup d'autres dans lesquelles un tel système d'absorption d'énergie peut être utilisé pour dissiper l'énergie d'un choc.

Ainsi par exemple, un ensemble selon l'invention pourra avantageusement être utilisé au niveau du capot moteur d'un véhicule pour absorber l'énergie d'un éventuel choc avec la tête d'un piéton. Dans ce cas, il sera par exemple placé dans les charnières du capot.

Un ou plusieurs ensembles selon l'invention peuvent également être mis en place dans les sièges d'un véhicule, préférentiellement au niveau de l'armature interne de ces sièges, pour absorber l'énergie développée par les passagers ou des objets projetés contre ces sièges en cas de collision du véhicule.

D'autres applications encore peuvent être envisagées par l'homme du métier sans sortir de la portée, ni du cadre de l'invention.

Les véhicules automobiles sont classiquement équipés, à l'avant et à l'arrière, d'un bouclier composé d'une poutre 1 métallique qui s'étend transversalement au véhicule, sur laquelle est rapportée une peau en matière plastique, préférentiellement en polypropylène, constituant le pare-choc du véhicule et pouvant intégrer en outre des ouvertures ou supports pour les optiques du véhicule, des aérations, et/ou d'autres éléments techniques de fonction diverse.

La poutre 1, préférentiellement formée d'une tôle emboutie ou d'un profilé d'aluminium, sert d'armature de rigidification au bouclier.

Comme on peut le voir sur les figures 1 et 2, cette poutre 1 est reliée à l'extrémité des longerons 2 de châssis du véhicule, qui s'étendent longitudinalement sur toute la longueur du véhicule et supportent la caisse, par l'intermédiaire de deux ensembles absorbeur d'énergie 3 selon l'invention intercalés chacun entre le bouclier et l'un des longerons 2 du véhicule à moteur, préférentiellement automobile.

Plus précisément, chaque ensemble absorbeur d'énergie 3 est monté d'un côté sur la poutre transversale 1 du bouclier et de l'autre coté sur un longeron 2 de châssis du véhicule.

L'ensemble absorbeur d'énergie 3 selon l'invention est formé de deux parties indépendantes : un tube absorbeur 4 et un support de rainurage 5, destinées à coopérer l'une avec l'autre pour réaliser l'absorption d'énergie cinétique souhaitée en cas de choc.

Un mode de réalisation préférentiel du tube absorbeur 4 a été représenté seul sur la figure 5. Il présente une section préférentiellement circulaire, bien que d'autres formes puissent être également envisagées, notamment une section ovale ou autre. Dans ce cas, le support de rainurage 5 doit être adapté en conséquence.

Le tube absorbeur 4 comporte une couche extérieure en matière plastique, se présentant préférentiellement sous la forme d'un tube extérieur 6 en matière plastique, de dimensions adaptées pour pouvoir coopérer avec le support de rainurage 5 et réaliser la fonction d'absorption d'énergie selon l'invention.

Cette couche ou ce tube extérieur 6 est obtenu par moulage préférentiellement par injection à partir d'une matière plastique appropriée quelconque. Il s'agit par exemple de polyamide, de polychlorure de vinyle (PVC), de polyéthylène, de polypropylène, de polycarbonate, de polyéthylènetéréphtalate (PET) ou autre.

Il peut également s'agir d'un mélange de matières plastiques ou d'une matière plastique chargée, notamment en fibres de carbone, en fibres de verre, en talc, en mica, en silicate, en microparticules métalliques ou autre.

Le choix de la matière va dépendre des caractéristiques techniques que l'on souhaite obtenir pour l'ensemble absorbeur d'énergie 3 selon l'invention, la résistance au découpage de copeaux de la matière choisie influençant la quantité d'énergie absorbée en cas de choc.

La couche extérieure est réalisée de préférence en polyamide ce qui lui confère des propriétés de glissement satisfaisantes facilitant son mouvement d'avancement forcé à travers le support de rainurage 5.

Son épaisseur et sa longueur doivent être suffisantes pour pouvoir réaliser correctement la fonction recherchée et absorber le maximum d'énergie.

Selon un mode de réalisation préférentiel, son épaisseur peut être de l'ordre de 6 à 10 mm, pour un diamètre extérieur compris entre 20 et 120 mm. Sa longueur est préférentiellement comprise entre 50 et 200 mm.

Le tube absorbeur 4 peut être renforcé par un insert métallique de rigidification se présentant préférentiellement sous la forme d'un tube intérieur 7 sur lequel est emmanché le tube extérieur 6. Cet insert métallique rigidifie l'ensemble et peut être éventuellement utilisé pour réaliser la fixation du tube absorbeur 4 à la poutre 1 du bouclier.

En effet, cette fixation peut avantageusement se faire par l'intermédiaire du tube intérieur 7 métallique, par exemple par soudage, par vissage ou par tout autre moyen approprié. Cette fixation est réalisée au niveau de l'extrémité avant 8 du tube intérieur 7 qui dépasse préférentiellement au-delà de la couche ou du tube extérieur 6.

Pour réaliser le montage du tube absorbeur 4, on commence de préférence par fixer le tube intérieur 7 métallique sur la poutre 1 du bouclier. Puis on emmanche le tube extérieur 6 en matière plastique sur le tube intérieur 7.

Au niveau de son extrémité arrière 11, le tube absorbeur 4 présente de préférence un ensemble de cannelures longitudinales 12 creusées dans sa couche extérieure 6 et débouchant à l'extrémité du tube mais ne se prolongeant que sur une partie de sa longueur.

Ces cannelures 12 permettent l'engagement initial de l'extrémité arrière 11 du tube absorbeur 4 dans le support de rainurage 5. Leur nombre, leur emplacement, leur forme et leur profondeur doivent bien sûr être adaptés et complémentaires aux éléments correspondants de rainurage portés par le support de rainurage 5 que l'on va maintenant décrire de façon détaillée.

Le support de rainurage 5 de l'ensemble absorbeur 3 selon l'invention est une pièce métallique qui, comme on le verra par la suite, peut avantageusement être réalisée d'un seul tenant par emboutissage.

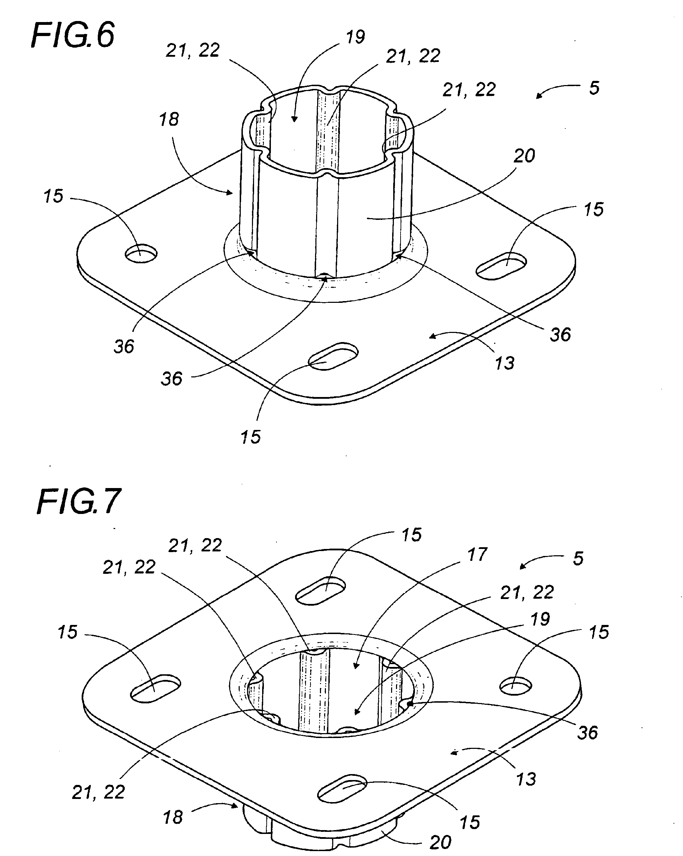

Le support de rainurage 5, représenté seul sur les figures 6 à 10 comporte une platine 13 sensiblement plane, destinée à être rapportée contre un rebord périphérique ou une platine d'extrémité 14 terminant chaque longeron 2 de châssis du véhicule et à être solidarisée à celui-ci.

Pour cela, la platine 13 du support de rainurage 5 peut présenter en périphérie un ensemble d'ouvertures de fixation 15, destinées à coopérer avec des ouvertures correspondantes d'une platine d'extrémité 14 de l'élément de structure, ici le longeron 2, afin de permettre le passage d'éléments de fixation appropriés tels que par exemple un ensemble de boulons 16. D'autres moyens de fixation peuvent évidemment être envisagés à titre de variante.

La platine 13 du support de rainurage 5 présente en outre une ouverture centrale 17 de forme et de dimensions adaptées à celles du tube absorbeur 4 de façon que ce dernier puisse être introduit et poussé à travers cette ouverture 17.

Il s'agit sur le mode de réalisation préférentiel représenté d'une ouverture circulaire dont le diamètre correspond sensiblement au diamètre extérieur du tube extérieur 6 du tube absorbeur 4.

Le support de rainurage 5 selon l'invention comprend également un manchon tubulaire de guidage 18 qui s'étend à l'arrière de la platine 13 et dont le volume intérieur creux 19 se trouve dans le prolongement de l'ouverture centrale 17.

La forme et les dimensions du volume intérieur creux 19 du manchon tubulaire de guidage 18 correspondent sensiblement à celles du tube extérieur 6 du tube absorbeur 4, de manière que la paroi latérale 20 du manchon tubulaire 18 exerce un guidage serré du tube absorbeur 4 lorsque celui-ci est poussé à travers le support de rainurage 5. Sa longueur doit également être suffisante pour qu'un guidage satisfaisant puisse être réalisé. La longueur du manchon tubulaire de guidage 18 est ainsi comprise par exemple entre 40 et 50 mm.

Sur l'exemple représenté, le manchon tubulaire de guidage 18 est sensiblement cylindrique et présente un diamètre intérieur correspondant sensiblement au diamètre extérieur du tube absorbeur 4.

La face intérieure de la paroi latérale 20 du manchon tubulaire de guidage 18 présente une série de saillies longitudinales 21 s'étendant longitudinalement dans le volume intérieur 19 du manchon de guidage 18 et de préférence régulièrement réparties sur cette paroi.

Selon un mode de réalisation préférentiel mais non obligatoire, ces saillies longitudinales 21 sont des déformations de la paroi latérale 20 du manchon tubulaire de guidage 18.

Sur l'exemple représenté, elles présentent une section de forme arrondie, mais peuvent présenter toute autre forme de section adaptée, par exemple pointue, rectangulaire, trapézoïdale ou autre.

Ces saillies longitudinales 21 constituent les éléments de rainurage 22, également appelés couteaux, du support de rainurage 5. Leur nombre, leur espacement et leurs dimensions doivent être choisis en fonction de la quantité d'énergie que l'on souhaite absorber.

Pour que l'énergie absorbée soit maximale, il convient d'utiliser un nombre important d'éléments de rainurage 22 afin de d'obtenir un effort de coupe le plus élevé possible lors de l'avancement forcé du tube absorbeur 4 à travers le support de rainurage 5.

La hauteur de ces éléments de rainurage 22 correspond à la profondeur de la cannelure 12 qui sera réalisée dans le tube absorbeur 4. Elle doit donc être adaptée à l'épaisseur du tube extérieur 6 en matière plastique du tube absorbeur 4. Elle peut être par exemple d'environ 4 mm pour une épaisseur de tube de l'ordre de 6 à 10 mm.

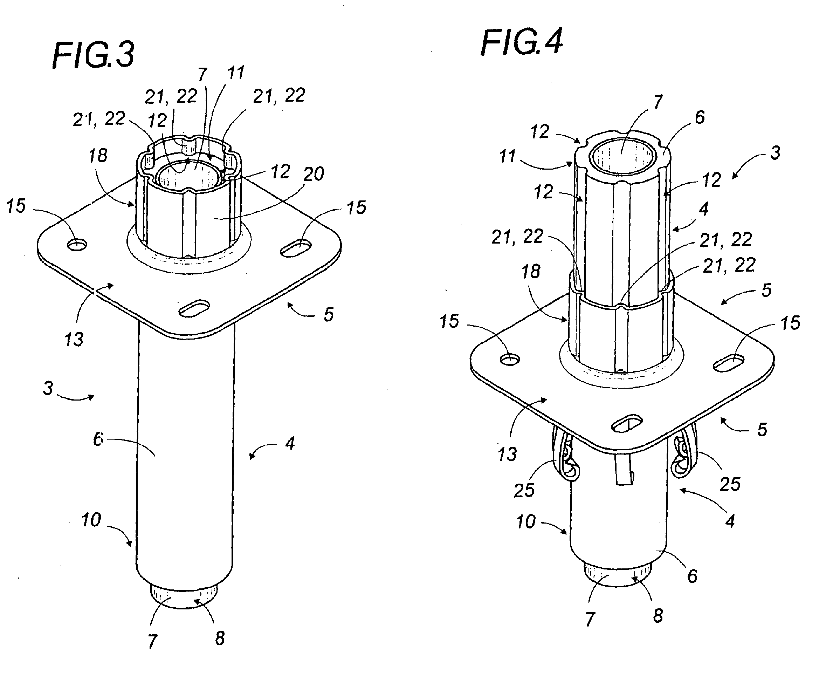

L'ensemble absorbeur 3 a été représenté assemblé sur les figures 3 et 4 et monté en position d'utilisation sur le véhicule sur les figures 1 et 2.

Pour former l'ensemble absorbeur 3 selon l'invention, le support de rainurage 5 doit être rapporté sur le tube absorbeur 4 comme illustré sur la figure 3. Pour cela, l'extrémité arrière 11 cannelée du tube absorbeur 4 est engagée à travers l'ouverture centrale 17 de la platine 13 du support de rainurage 5 et s'enfonce à l'intérieur du manchon de guidage 18 de celui-ci.

Les cannelures longitudinales 12 présentes sur l'extrémité arrière 11 du tube absorbeur 4 sont complémentaires des éléments de rainurage 22 en saillie dans le volume intérieur 19 du manchon de guidage 18. Elles permettent ainsi l'engagement initial, limité à sa partie cannelée, de l'extrémité arrière 11 du tube absorbeur 4 dans le manchon de guidage 18.

Le manchon de guidage 18 du support de rainurage 5 et le tube extérieur 6 du tube absorbeur 4 présentent des dimensions adaptées et des formes complémentaires, de façon que le manchon de guidage 18 épouse parfaitement la forme du tube extérieur 6 et assure ainsi un guidage serré de celui-ci lorsqu'il est forcé en avancement à travers le support de rainurage 5 et ce même si la force de poussée qui s'exerce sur le tube absorbeur 4 n'est pas entièrement longitudinale.

En position initiale de repos représentée sur la figure 3, le bord des éléments de rainurage 22 se trouve préférentiellement en butée contre la paroi terminale 23 des cannelures 12 correspondantes.

Comme précédemment indiqué, un ensemble absorbeur d'énergie 3 selon l'invention est mis en place dans le véhicule entre la poutre 1 du bouclier et chacun des longerons 2 de châssis du véhicule. Pour cela, le tube absorbeur 4 est solidarisé à la poutre 1 au niveau de son extrémité avant 10 par tout moyen approprié et de l'autre côté, le support de rainurage 6 est fixé par sa platine 13 au longeron 2.

Comme il est situé à l'arrière de la platine 13, le manchon de guidage 18 peut avantageusement être logé à l'intérieur de l'extrémité creuse du longeron 2, limitant ainsi l'encombrement du dispositif.

Pour compléter la fixation de l'ensemble absorbeur, l'extrémité arrière du tube intérieur 7 métallique peut être sertie à l'arrière du manchon tubulaire de guidage 18 du support de rainurage 5.

Par cette opération de sertissage, on forme un rebord périphérique à l'extrémité du tube intérieur 7, pouvant éventuellement être complété par une rondelle préalablement intercalée. Ce rebord constitue une butée arrière s'opposant au retrait du tube absorbeur 4 hors du support de rainurage 5.

La poutre 1 étant fixée, notamment par soudage, au tube absorbeur 4 et le support de rainurage 5 étant fixé par sa platine au longeron 2, ce rebord de sertissage s'oppose à tout effort de traction exercé sur la poutre 1 et assure une fixation correcte de la poutre 1 au longeron 2.

En cas de choc symbolisé par la flèche 24, le bouclier se déforme et se déplace sur ses fixations en direction des longerons 2.

Lors de ce mouvement de rapprochement, le tube absorbeur 4, qui est solidarisé à la poutre 1 du bouclier, est poussé vers le support de rainurage 5 fixé sur le longeron 2. Le tube absorbeur 4, dont l'extrémité arrière 11 était déjà engagée à travers l'ouverture centrale 17 de la platine 13 et dans le manchon de guidage 18 du support de rainurage 5, est forcé en avancement à travers le support de rainurage 5.

Au cours de cet avancement forcé, les éléments de rainurage 22 du manchon de guidage 18, qui étaient en appui contre les parois terminales 23 des cannelures 12, viennent mordre dans l'épaisseur du tube extérieur 6 en matière plastique du tube absorbeur 4 et réalisent un épluchage de celui-ci en arrachant des copeaux 25 de matière plastique, prolongeant ainsi longitudinalement les cannelures 12, comme représenté sur les figures 2 et 4.

L'opération de creusement des cannelures 12 par arrachement des copeaux 25 au moyen des éléments de rainurage 22 nécessite un effort de coupe important, qui débute dès le début du mouvement d'avancement forcé du tube absorbeur 4 et reste constant sur toute la longueur de cet avancement. Une grande quantité d'énergie cinétique peut ainsi être rapidement absorbée par le dispositif selon l'invention et transformée en énergie de coupe.

Comme le manchon de guidage 18 du support de rainurage 5 se trouve à l'arrière de la platine 13, logé à l'intérieur du longeron 2, la course utile du tube absorbeur 4, c'est-à-dire la longueur d'avancement forcé du tube absorbeur 4 sur laquelle les copeaux 25 peuvent être arrachés et l'absorption d'énergie réalisée en cas de choc, est maximale. En effet, cette course utile correspond à la totalité de la longueur libre du tube absorbeur 4, la poutre 1 pouvant avancer en cas de choc jusqu'à buter contre la platine 13 fixée à l'extrémité du longeron 2. D'autre part, l'effort de coupe est constant sur toute la course, et permet donc d'obtenir une absorption d'énergie maximale.

En outre, cette absorption d'énergie peut être assurée même lorsque l'axe du choc est oblique et non longitudinal, du fait d'un guidage particulièrement efficace du tube absorbeur 4 pendant son avancement forcé, réalisé par le manchon de guidage 18.

En effet, la paroi latérale 20 du manchon 18 n'est pas simplement cylindrique, mais présente sur sensiblement toute sa longueur des saillies longitudinales 21 complémentaires des cannelures 12 creusées dans le tube absorbeur 4. La paroi latérale 20 se trouve ainsi en contact de guidage avec l'ensemble de la surface extérieure du tube absorbeur 4 cannelé et non uniquement avec la partie encore cylindrique de celle-ci, ce qui lui permet d'assurer un guidage serré particulièrement efficace du tube absorbeur 4.

La quantité d'énergie absorbable par le système peut être optimisée en jouant sur plusieurs paramètres : la longueur et le diamètre du tube absorbeur 4, le nombre, la taille et la répartition des éléments de rainurage 22, la profondeur des cannelures réalisées.

L'ensemble absorbeur d'énergie 3 amélioré de l'invention peut être fabriqué selon différents procédés de fabrication.

Le tube absorbeur 4 peut être réalisé par exemple par moulage par injection pour sa partie extérieure en matière plastique.

Le support de rainurage 5 en métal peut être réalisé d'une pièce ou en deux parties indépendantes : la platine 13 d'une part et le manchon de guidage 18 d'autre part, ces deux parties étant assemblées par la suite.

Plusieurs techniques de fabrication peuvent être envisagées pour réaliser le support de rainurage 5.

Le manchon de guidage 18 peut ainsi par exemple être réalisé par frittage et la platine 13 par poinçonnage, les deux pièces étant ensuite réunies préférentiellement par soudage.

Le support de rainurage 5 peut également être fabriqué en une seule pièce de fonte par moulage de fonderie.

Selon un mode de réalisation préférentiel, le support de rainurage 5 est réalisé en tôle par emboutissage.

Avantageusement, le support de rainurage 5 est réalisé d'un seul tenant, ce qui évite le surcoût d'une étape supplémentaire d'assemblage et notamment d'une étape supplémentaire de soudage.

Un exemple préférentiel de procédé de fabrication d'un support de rainurage 5 selon l'invention a été représenté schématiquement sur les figures 11 à 23. Selon ce procédé préférentiel, le support de rainurage 5 est fabriqué d'une pièce par emboutissage.

On part pour cela d'un flan de tôle 26 qui est maintenu au-dessus d'une matrice d'emboutissage 27 par un ensemble de serre-flans 28. Une cavité 29, présentant la forme souhaitée pour le flan de tôle 26 à la fin de l'opération d'emboutissage, est ménagée dans la matrice d'emboutissage 27 afin de servir de contre-forme d'appui.

Comme illustré sur les figures 11 à 13, le flan de tôle 26 est progressivement déformé et étiré par un poinçon d'emboutissage 30 mobile au-dessus de la cavité 29 de la matrice 27 et descendant progressivement à l'intérieur de celle-ci. Ce poinçon 30 confère au flan de tôle 26 la forme d'un pot cylindrique 31 correspondant à la forme générale du support de rainurage 5.

Pour obtenir la forme finale souhaitée sans déchirer la tôle, il est généralement nécessaire de réaliser plusieurs opérations d'emboutissage successives, trois par exemple. Pour cela, on utilise successivement plusieurs poinçons d'emboutissage 30, de diamètre décroissant et de profondeur de course croissante, ainsi que plusieurs matrices 27 à cavité 29 adaptée. On commence par un poinçon de grand diamètre ne descendant que sur une faible profondeur et avec des rayons de courbures important en fond de pot et au niveau de la liaison avec la partie encore plane du flan de tôle, et on termine avec un poinçon 30 dont le diamètre, la profondeur de course et les rayons de courbure correspondent à la forme à obtenir.

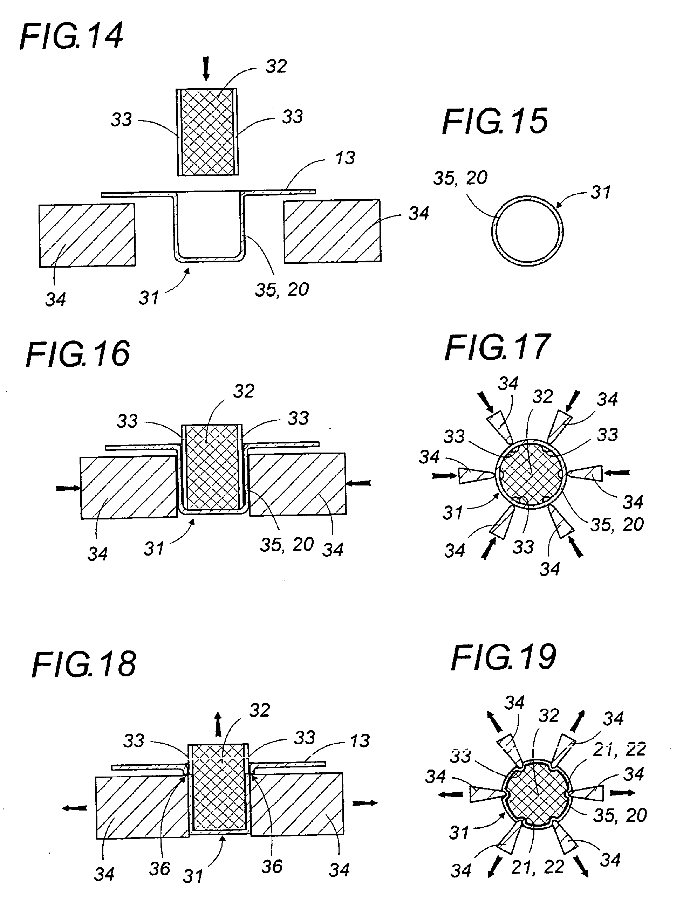

L'étape suivante du procédé, représentée sur les figures 14 à 18, consiste à former les saillies longitudinales 21 qui serviront d'éléments de rainurage 22.

Pour cela, une contre-forme 32 est introduite dans le pot cylindrique 31. Cette contre-forme 32 présente une forme générale de cylindre dont les dimensions correspondent à celles du volume intérieur du pot cylindrique 31, c'est-à-dire à celles du volume intérieur 19 du manchon de guidage 18 à obtenir.

La contre-forme 32 comporte une série de rainures longitudinales 33 disposées en regard de l'emplacement prévu pour les saillies longitudinales 21 et dont les formes et les dimensions sont complémentaires de celles des saillies longitudinales 21 à obtenir.

Une série de cales 34 de forme adaptée, est placées à l'extérieur du pot cylindrique 31 en face de chaque rainure longitudinale 33. Comme représenté sur les figures 16 à 19, chacune de ces cales 34 vient déformer la paroi latérale 35 du pot cylindrique 31, qui deviendra par la suite la paroi latérale 20 du manchon de guidage 18, en enfonçant localement celle-ci dans la rainure 33 correspondante de la contre-forme 32, conformant ainsi la saillie longitudinale 21 souhaitée.

La déformation de la paroi latérale 35, provoquée par l'avancée des cales 34 en direction de la contre-forme 32, s'accompagne d'un cisaillement localisé 36 de cette paroi 35 entre la partie déformée et la partie non déformée de celle-ci, à la naissance de chaque saillie longitudinale 31.

Après le retrait des cales 34 et de la contre-forme 32, une étape de découpe du fond 37 du pot cylindrique 31 permet de terminer le manchon tubulaire de guidage 18, comme représenté sur les figures 20 et 21.

Une dernière étape de poinçonnage schématisée sur la figure 22, permet de découper le bord de la platine 13 pour lui donner la forme et les dimensions finales souhaitées. Elle permet également la réalisation simultanée des ouvertures de fixation 15 dans la platine 13. On obtient alors le support de rainurage 5 fini représenté sur la figure 23.

Selon d'autres variantes de ce procédé de fabrication, les étapes de découpe du fond 37 et de poinçonnage de la platine 13 peuvent être réalisées simultanément ou indépendamment l'une de l'autre et dans un ordre quelconque l'une par rapport à l'autre. De la même façon, ces deux étapes ou l'une de ces étapes peut ou peuvent être réalisée(s) avant l'opération de conformation des saillies longitudinales 21 par déformation et cisaillement de la paroi latérale 35 du pot cylindrique 31.

Le procédé de fabrication précédemment décrit est particulièrement avantageux, car il permet de réaliser le support de rainurage 5 à partir d'un flan de tôle 26 par emboutissage. Ce procédé préférentiel est particulièrement économique.

Il permet en outre de former le support de rainurage 5 d'une seule pièce, supprimant ainsi la nécessité d'une étape d'assemblage supplémentaire, de soudage par exemple, qui rallonge le procédé et en augmente le coût.

Bien que ce procédé de fabrication soit préférentiel, l'invention n'est en aucun cas limitée par celui-ci, l'ensemble absorbeur d'énergie 3 selon l'invention pouvant être obtenu par tout autre procédé de fabrication adapté permettant d'obtenir les caractéristiques essentielles revendiquées.

De manière évidente, l'invention ne se limite pas au mode de réalisation préférentiel décrit précédemment et représenté sur les différentes figures, l'homme du métier pouvant y apporter de nombreuses modifications et imaginer d'autres variantes et d'autres applications sans sortir ni de la portée, ni du cadre de l'invention.

Ainsi par exemple, le manchon tubulaire de guidage 18 peut comporter à l'avant une portion d'engagement cylindrique, située directement à la suite de l'ouverture centrale 17 de la platine 13 et ne présentant pas de saillies longitudinales 21, les saillies longitudinales 21 ne débutant qu'après cette portion d'engagement.

Dans ce cas, le tube absorbeur 4 peut être entièrement cylindrique et initialement sans cannelure, son extrémité arrière 11 étant engagée au montage dans la portion d'engagement cylindrique du manchon tubulaire de guidage 18. Le tube extérieur 6 en matière plastique peut alors avantageusement être réalisé par extrusion.

Selon une autre variante non représentée, le manchon tubulaire de guidage 18 du support de rainurage 5 peut comporter, en plus des saillies longitudinales 21, une série de dents de découpe, prenant naissance au niveau de l'extrémité arrière du manchon de guidage 18 et s'étendant en direction de son volume intérieur 19.

Ces dents de découpe sont intercalées entre les saillies longitudinales 21 et servent d'éléments de rainurage supplémentaire. Elles permettent, à la sortie du manchon tubulaire de guidage 18, de découper des copeaux dans les zones encore cylindriques du tube absorbeur 4 entre les cannelures 12 creusées par les saillies longitudinales 21. La couche extérieure 6 de matière plastique du tube absorbeur 4 est ainsi exploitée au maximum et une quantité supplémentaire d'énergie cinétique est dissipée sous la forme d'une énergie de coupe supplémentaire.

Avantageusement, lorsque le support de rainurage 5 est réalisé par emboutissage selon le procédé préférentiel précédemment décrit, les dents de découpe du manchon tubulaire de guidage 18 peuvent être formées très simplement par découpe pendant l'étape de découpe du fond 37 du pot cylindrique 31 et simultanément à celle-ci.

## Revendications

1. Ensemble absorbeur d'énergie cinétique (3) pour véhicule à moteur, notamment automobile, comprenant un tube absorbeur (4) dont une couche extérieure (6) au moins est en matière plastique et un support de rainurage (5) métallique portant des éléments de rainurage (22), le tube absorbeur (4) étant solidarisé à une pièce (1) susceptible de recevoir un choc dont on veut absorber l'énergie cinétique et le support de rainurage (5) étant solidarisé à un élément de structure (2) à extrémité creuse du véhicule, le tube absorbeur (4) et le support de rainurage (5) étant disposés de façon qu'en cas de choc longitudinal, le tube absorbeur (4) soit forcé en avancement à travers une ouverture centrale (17) du support de rainurage (5) et que les éléments de rainurage (22) arrachent des copeaux (25) de matière plastique à la surface du tube absorbeur (4), dissipant par cette opération de rainurage au moins une partie de l'énergie cinétique du choc, ensemble absorbeur d'énergie cinétique (3) **caractérisé en ce que** le support de rainurage (5) comprend :
- une platine (13) destinée à être solidarisée à l'extrémité (14) de l'élément de structure (2) et comportant une ouverture centrale (17), et
- un manchon tubulaire de guidage (18), qui s'étend à l'arrière de la platine (13) afin d'être logé à l'intérieur de l'extrémité creuse de l'élément de structure (2) ; dont le volume intérieur creux (19) se trouve dans le prolongement de l'ouverture centrale (17) de la platine (13) ; et dont la paroi latérale (20) présente une série de saillies longitudinales (21) s'étendant longitudinalement dans son volume intérieur (19), ces saillies longitudinales (21) constituant les éléments de rainurage (22) du support de rainurage (5) ;
**en ce que** l'extrémité arrière (11) du tube absorbeur (4) est initialement engagée à travers l'ouverture centrale (17) et dans le manchon tubulaire de guidage (18) du support de rainurage (5) ;
**en ce qu'**en cas de choc longitudinal ou incliné, le tube absorbeur (4) est forcé en avancement à travers l'ouverture centrale (17) puis le manchon tubulaire de guidage (18) du support de rainurage (5), les saillies longitudinales (21) arrachant des copeaux (25) de matière plastique et creusant des cannelures (12) longitudinales dans la paroi latérale du tube absorbeur (4) ; et
**en ce que** la paroi latérale (20) du manchon tubulaire de guidage (18) se trouve en contact de guidage avec sensiblement toute la surface extérieure de la paroi latérale de la portion du tube absorbeur (4) engagée dans le manchon tubulaire de guidage (18) et exerce ainsi un guidage serré de l'avancée du tube absorbeur (4).

2. Ensemble absorbeur d'énergie cinétique selon la revendication précédente **caractérisé en ce qu'**il est destiné à être monté à l'arrière d'un bouclier, sur une charnière du capot moteur ou au niveau de l'armature interne d'un siège du véhicule.

3. Ensemble absorbeur d'énergie cinétique selon l'une quelconque des revendications précédentes **caractérisé en ce que** le tube absorbeur (4) présente un ensemble de cannelures longitudinales (12) creusées dans sa couche extérieure (6) en matière plastique, qui débouchent à l'extrémité arrière (11) du tube mais ne se prolongent que sur une partie de sa longueur, ces cannelures (12) étant complémentaires des saillies longitudinales (21) du manchon tubulaire de guidage (18) afin de permettre l'engagement initial de l'extrémité arrière (11) du tube absorbeur (4) dans le manchon tubulaire de guidage (18) du support de rainurage (5).

4. Ensemble absorbeur d'énergie cinétique selon l'une quelconque des revendications précédentes **caractérisé en ce que** le tube absorbeur (4) présente une section circulaire, **en ce que** l'ouverture centrale (17) de la platine (13) est également circulaire et **en ce que** le manchon tubulaire de guidage (18) est sensiblement cylindrique, le diamètre de l'ouverture centrale (17) et le diamètre intérieur du manchon tubulaire de guidage (18) correspondant sensiblement au diamètre extérieur du tube absorbeur (4).

5. Ensemble absorbeur d'énergie cinétique selon l'une quelconque des revendications précédentes **caractérisé en ce que** la couche extérieure (6) du tube absorbeur (4) est réalisée en polyamide.

6. Ensemble absorbeur d'énergie cinétique selon l'une quelconque des revendications précédentes **caractérisé en ce que** le tube absorbeur (4) comporte en outre un insert métallique (7) de rigidification.

7. Ensemble absorbeur d'énergie cinétique selon la revendication précédente **caractérisé en ce que** la couche extérieure du tube absorbeur (4) est un tube extérieur (6) en matière plastique et **en ce que** l'insert métallique de rigidification est un tube intérieur (7) sur lequel est emmanché le tube extérieur (6) en matière plastique.

8. Ensemble absorbeur d'énergie cinétique selon l'une quelconque des revendications précédentes **caractérisé en ce que** les saillies longitudinales (21) sont des déformations de la paroi latérale (20) du manchon tubulaire de guidage (18).

9. Ensemble absorbeur d'énergie cinétique selon l'une quelconque des revendications précédentes **caractérisé en ce que** les saillies longitudinales (21) présentent une section de forme arrondie, pointue, rectangulaire ou trapézoïdale.

10. Ensemble absorbeur d'énergie cinétique selon l'une quelconque des revendications précédentes **caractérisé en ce que** la couche extérieure (6) en matière plastique du tube absorbeur (4) présente un diamètre extérieur compris entre 20 et 120 mm, une longueur comprise entre 50 et 200 mm et une épaisseur comprise entre 6 et 10 mm ; **en ce que** la longueur du manchon tubulaire de guidage (18) est comprise entre 40 et 50 mm et **en ce que** les saillies longitudinales (21) présentent une hauteur d'environ 4 mm.

11. Ensemble absorbeur d'énergie cinétique selon l'une quelconque des revendications précédentes **caractérisé en ce que** le manchon tubulaire de guidage (18) comporte en outre des dents de découpe, prenant naissance au niveau son extrémité arrière et s'étendant en direction de son volume intérieur (19).

12. Procédé de fabrication d'un ensemble absorbeur d'énergie cinétique selon l'une quelconque des revendications précédentes **caractérisé en ce que** le support de rainurage (5) est réalisé d'une seule pièce par emboutissage à partir d'un flan de tôle (26).

13. Procédé de fabrication d'un ensemble absorbeur d'énergie cinétique selon la revendication précédente **caractérisé en ce que** l'opération de fabrication du support de rainurage (5) comprend les étapes suivantes :
- déformation d'un flan de tôle (26) par emboutissage pour lui conférer la forme générale d'un pot cylindrique (31) ;
- formation des saillies longitudinales (21) par déformation et cisaillement localisé de la paroi latérale (35) du pot cylindrique (31) ;
- découpe du fond (37) du pot cylindrique (31) ; et
- découpe par poinçonnage du bord de la platine (13) et de ses éventuelles ouvertures de fixation (15).

14. Procédé de fabrication d'un ensemble absorbeur d'énergie cinétique selon la revendication précédente **caractérisé en ce que** l'étape de formation des saillies longitudinales (21) comprend :
- l'introduction dans le pot cylindrique (31) d'une contre-forme (32) sensiblement cylindrique présentant une série de rainures longitudinales (33) ; et
- la déformation de la paroi latérale (35) du pot cylindrique (31) par une série de cales (34) situées à l'extérieur du pot cylindrique (31) en face des rainures longitudinales (33), ces cales (34) avançant en direction de la contre-forme (32) de façon à enfoncer localement la paroi latérale (35) dans les rainures (33) de la contre-forme (32).

15. Procédé de fabrication d'un ensemble absorbeur d'énergie cinétique selon la revendication 13 ou 14 **caractérisé en ce que** l'on forme simultanément, dans le manchon tubulaire de guidage (18), des dents de découpe lors de l'étape de découpe du fond (37) du pot cylindrique (31).

## Claims

1. Kinetic energy absorber assembly (3) for motor vehicle, in particular automobile, comprising an absorber tube (4) of which at least one external layer (6) is in plastic and a metallic grooved support (5) carrying the grooved elements (22), the absorber tube (4) being fixed to a piece (1) capable of receiving a shock of which one wants to absorb the kinetic energy and the grooved support (5) being fixed to a structure element (2) with hollow end of the vehicle, the absorber tube (4) and the grooved support (5) being arranged in such a way that in case of longitudinal shock, the absorber tube (4) is forced in advancement through a central opening (17) of the grooved support (5) and that the grooved elements (22) tear off splinters (25) of plastic from the surface of the absorber tube (4), dissipating, by this grooving operation, at least a part of the kinetic energy of the shock, the kinetic energy absorber assembly (3) being **characterized in that** the grooved support (5) includes :
- a plate (13) to be connected to the end (14) of the structure element (2) and including a central opening (17), and
- a guide sleeve tube (18) which extends behind the plate (13) to be housed inside the hollow end of the structure element (2); the hollow inner volume of which (19) is in the prolongation of the central opening (17) of the plate (13); and whose side wall (20) presents a series of longitudinal protrusions (21) extending longitudinally in its inner volume (19), these longitudinal protrusions (21) forming the grooved elements (22) of the grooved support (5);
**in that** the rear end (11) of the absorber tube (4) is initially inserted through the central opening (17) and into the guide sleeve tube (18) of the grooved support (5),
. **in that** in case of inclined or longitudinal shock, the absorber tube (4) is forced in advancement through the central opening (17) and then through the guide sleeve tube (18) of the grooved support (5), the longitudinal protrusions (21) tearing off splinters (25) of plastic and digging the longitudinal grooves (12) in the side wall of the absorber tube (4);
and **in that** the side wall (20) of the guide sleeve tube (18) is in guide contact with essentially the whole external surface of the side wall of the portion of the absorber tube (4) inserted in the guide sleeve tube (18), and thus exercises a close guidance of the advancement of the absorber tube (4).

2. Kinetic energy absorber assembly according to the previous claim **characterized in that** it is to be mounted in the rear of a bumper, on a hinge of the bonnet or at the internal framework of a seat of the vehicle.

3. Kinetic energy absorber assembly according to any of the preceding claims **characterized in that** the absorber tube (4) presents a longitudinal groove unit (12) dug in its external layer (6) in plastic, which open to the rear end (11) of the tube but only prolong on a part of its length, these grooves (12) being complementary to the longitudinal protrusions (21) of the guide sleeve tube (18) in order to allow the initial insertion of the rear end (11) of the absorber tube (4) into the guide sleeve tube (18) of the grooved support (5).

4. Kinetic energy absorber assembly according to any of the preceding claims **characterized in that** the absorber tube (4) presents a circular cross section, **in that** the central opening (17) of the plate (13) is also circular and **in that** the guide sleeve tube (18) is essentially cylindrical, the diameter of the central opening (17) and the inner diameter of the guide sleeve tube (18) corresponding essentially to the external diameter of the absorber tube (4).

5. Kinetic energy absorber assembly according to any of the preceding claims **characterized in that** the external layer (6) of the absorber tube (4) is realized in polyamide.

6. Kinetic energy absorber assembly according to any of the preceding claims **characterized in that** the absorber tube (4) furthermore includes a metallic inset (7) for stiffening.

7. Kinetic energy absorber assembly according to the previous claim **characterized in that** the external layer of the absorber tube (4) is an external tube (6) in plastic and **in that** the stiffening metallic inset is an inner tube (7) on which the external tube (6) in plastic is press fit.

8. Kinetic energy absorber assembly according to any of the preceding claims **characterized in that** the longitudinal protrusions (21) are deformations of the side wall (20) of the guide sleeve tube (18).

9. Kinetic energy absorber assembly according to any of the preceding claims **characterized in that** the longitudinal protrusions (21) present a rounded, pointed, trapezoidal, or rectangular section.

10. Kinetic energy absorber assembly according to any of the preceding claims **characterized in that** the external layer (6) in plastic of the absorber tube (4) presents an external diameter comprised between 20 and 120 mm, a length comprised between 50 and 200 mm and a thickness comprised between 6 and 10 mm; **in that** the length of the guide sleeve tube (18) is comprised between 40 and 50 mm and **in that** the longitudinal protrusions (21) present a height of about 4 mm.

11. Kinetic energy absorber assembly according to any of the preceding claims **characterized in that** the guide sleeve tube (18) furthermore includes cutting teeth, beginning at its rear end and extending in direction of its inner volume (19).

12. Manufacturing process for a kinetic energy absorber assembly according to any of the preceding claims **characterized in that** the grooved support (5) is achieved in a single piece by stamping starting from a sheet blank (26).

13. Manufacturing process for a kinetic energy absorber assembly according to the previous claim **characterized in that** the manufacturing of the grooved support (5) includes the following steps:
- Deformation of a sheet blank (26) by stamping in order to confer it the general form of a cylindrical pot (31)
- Formation of the longitudinal protrusions (21) by deformation and localised shearing of the side wall (35) of the cylindrical pot (31);
- Cutting the basis (37) of the cylindrical pot (31); and
- Cutting by stamping of the edge of the plate (13) and of its possible fastening openings (15).

14. Manufacturing process for a kinetic energy absorber assembly according to the previous claim **characterized in that** the formation step of the longitudinal protrusions (21) includes:
- the introduction, into the cylindrical pot (31), of a counter-form (32) which is essentially cylindrical and presents a series of longitudinal grooves (33); and
- the deformation of the side wall (35) of the cylindrical pot (31) by a series of wedges (34) located outside the cylindrical pot (31) opposite the longitudinal grooves (33), these wedges (34) advancing in direction of the counter-form (32) so as to locally push the side wall (35) into the grooves (33) of the counter-form (32).

15. Manufacturing process for a kinetic energy absorber assembly according to claim 13 or 14 **characterized by** simultaneously forming, in the guide sleeve tube (18), cutting teeth during the cutting step of the basis (37) of the cylindrical pot (31).

## Patentansprüche

1. Absorptionseinheit für kinetische Energie (3) für Kraftfahrzeug, vor allem Personenkraftwagen, mit einem Absorptionsrohr (4), bei dem mindestens eine äußere Schicht (6) aus Kunststoff ist, und einer Rillenhalterung (5) aus Metall, der Rillenelemente (22) trägt, wobei das Absorptionsrohr (4) mit einem Teil (1) verbunden ist, das einen Stoß aufnehmen kann, dessen kinetische Energie man absorbieren will und wobei die Rillenhalterung (5) mit einem Strukturelement (2) mit hohlem Ende des Fahrzeugs verbunden ist, wobei das Absorptionsrohr (4) und die Rillenhalterung (5) derart angeordnet sind, dass bei Aufprall in Längsrichtung das Absorptionsrohr (4) durch eine zentrale Öffnung (17) der Rillenhalterung (5) gezwungen wird, und dass die Rillenelemente (22) Kunststoffsplitter (25) aus der Oberfläche des Absorptionsrohrs (4) reißen, so dass durch diese Rillung mindestens ein Teil der kinetischen Energie des Aufpralls gestreut wird, wobei die Absorptionseinheit für kinetische Energie (3) **dadurch gekennzeichnet ist, dass** die Rillenhalterung (5) folgendes umfasst:
- eine Platine (13), die mit dem Ende (14) des Strukturelement (2) verbunden wird und eine zentrale Öffnung (17) aufweist, und
- eine rohrförmige Führungsmuffe (18), die sich hinter die Platine (13) erstreckt, um in dem hohlen Ende des Strukturelements (2) untergebracht zu sein, dessen hohles Innenvolumen (19) sich in der Verlängerung der zentralen Öffnung (17) der Platine (13); befindet und dessen Seitenwand (20) eine Reihe von Längsvorsprüngen (21) aufweist, die sich in Längsrichtung in dessen Innenvolumen erstrecken (19), wobei diese Längsvorsprünge (21) die Rillenelemente (22) der Rillenhalterung (5) bilden;
**dadurch**, dass das hintere Ende (11) des Absorptionsrohrs (4) anfänglich durch die zentrale Öffnung (17 und in die rohrförmige Führungsmuffe (18) der Rillenhalterung (5) eingeführt wird,
**dadurch**, dass bei schrägem Aufprall oder in Längsrichtung das Absorptionsrohr (4) durch die zentrale Öffnung (17) gezwungen wird und dann durch die rohrförmige Führungsmuffe (18) der Rillenhalterung (5), wobei die Längsvorsprünge (21) Kunststoffsplitter (25) abreißen und Längsrillen (12) in die Seitenwand des Absorptionsrohrs (4) einbringen;
sowie **dadurch**, dass die Seitenwand (20) der rohrförmigen Führungsmuffe (18) sich in Führungskontakt mit im wesentlichen der gesamten Außenfläche der Seitenwand desjenigen Abschnitts des Absorptionsrohrs (4) befindet, der in die rohrförmige Führungsmuffe (18) eingeführt ist und so eine enge Führung der Fortbewegung des Absorptionsrohrs (4) ausübt.

2. Absorptionseinheit für kinetische Energie nach dem vorherigen Anspruch, **gekennzeichnet dadurch, dass** er hinten auf einen Stoßdämpfer, auf ein Scharnier der Motorhaube oder in das Innenteil eines Sitzes des Fahrzeugs montiert wird.

3. Absorptionseinheit für kinetische Energie nach einem beliebigen der vorherigen Ansprüche, **gekennzeichnet dadurch, dass** das Absorptionsrohr (4) eine Gruppe von Längsrillen (12) aufweist, die in ihrer Außenschicht (6) aus Kunststoff ausgehöhlt sind und ins hintere Ende (11) des Rohrs münden, sich aber nur auf einen Teil seiner Länge verlängern, wobei diese Rillen (12) komplementär zu den Längsvorsprüngen (21) der rohrförmigen Führungsmuffe (18) sind, um die anfängliche Einführung des hinteren Endes (11) des Absorptionsrohrs (4) in die rohrförmige Führungsmuffe (18) der Rillenhalterung (5) zu gestatten.

4. Absorptionseinheit für kinetische Energie nach einem beliebigen der vorherigen Ansprüche, **gekennzeichnet dadurch, dass** das Absorptionsrohr (4) einen runden Querschnitt aufweist, **dadurch**, dass die zentrale Öffnung (17) der Platine (13) ebenfalls rund ist sowie **dadurch**, dass die rohrförmige Führungsmuffe (18) im wesentlichen zylindrisch ist, wobei der Durchmesser der zentralen Öffnung (17) und der Innendurchmesser der rohrförmigen Führungsmuffe (18) im wesentlichen dem Außendurchmesser des Absorptionsrohrs (4) entsprechen.

5. Absorptionseinheit für kinetische Energie nach einem beliebigen der vorherigen Ansprüche, **gekennzeichnet dadurch, dass** die Außenschicht (6) des Absorptionsrohrs (4) aus Polyamid ist.

6. Absorptionseinheit für kinetische Energie nach einem beliebigen der vorherigen Ansprüche, **gekennzeichnet dadurch, dass** das Absorptionsrohr (4) außerdem einen metallische Einsatz (7) zur Versteifung umfasst.

7. Absorptionseinheit für kinetische Energie nach dem vorherigen Anspruch, **gekennzeichnet dadurch, dass** die Außenschicht des Absorptionsrohrs (4) ein äußeres Rohr (6) aus Kunststoff ist, sowie **dadurch**, dass der metallische Versteifungseinsatz ein inneres Rohr (7) ist, auf das das äußere Rohr (6) aus Kunststoff aufgebracht ist.

8. Absorptionseinheit für kinetische Energie nach einem beliebigen der vorherigen Ansprüche, **gekennzeichnet dadurch, dass** die Längsvorsprünge (21) Verformungen der Seitenwand (20) der rohrförmigen Führungsmuffe (18) sind.

9. Absorptionseinheit für kinetische Energie nach einem beliebigen der vorherigen Ansprüche, **gekennzeichnet dadurch, dass** die Längsvorsprünge (21) einen abgerundeten, spitzen, rechteckigen oder trapezförmigen Querschnitt aufweisen.

10. Absorptionseinheit für kinetische Energie nach einem beliebigen der vorherigen Ansprüche, **gekennzeichnet dadurch, dass** die Außenschicht (6) aus Kunststoff des Absorptionsrohrs (4) einen Außendurchmesser zwischen 20 und 120 mm aufweist, eine Länge zwischen 50 und 200 mm und eine Dicke zwischen 6 und 10 mm; **dadurch**, dass die Länge der rohrförmigen Führungsmuffe (18) zwischen 40 und 50 mm ist sowie **dadurch**, dass die Längsvorsprünge (21) eine Höhe von etwa 4 mm aufweisen.

11. Absorptionseinheit für kinetische Energie nach einem beliebigen der vorherigen Ansprüche, **gekennzeichnet dadurch, dass** die rohrförmige Führungsmuffe (18) außerdem Schneidzähne umfasst, die auf Höhe ihres Hinterendes beginnen und sich zu ihrem Innenvolumen (19) hin erstrecken.

12. Herstellungsverfahren für eine Absorptionseinheit für kinetische Energie nach einem beliebigen der vorherigen Ansprüche, **gekennzeichnet dadurch, dass** die Rillenhalterung (5) in einem einzigen Stück durch Tiefziehen ausgehend von einem Blechzuschnitt (26) verwirklicht wird.

13. Herstellungsverfahren für eine Absorptionseinheit für kinetische Energie nach dem vorherigen Anspruch, **gekennzeichnet dadurch, dass** die Herstellung der Rillenhalterung (5) die folgenden Schritte umfasst:
- Verformung eines Blechzuschnitts (26) durch Tiefziehen, um ihm die allgemeine Form eines zylindrischen Topfes (31) zu verleihen
- Bildung der Längsvorsprünge (21) durch Verformung und lokalisierte Abscherung der Seitenwand (35) des zylindrischen Topfes (31);
- Zuschneiden des Bodens (37) des zylindrischen Topfes (31); und
- Zuschneiden durch Lochstanzen des Randes der Platine (13) und ihrer eventuellen Befestigungsöffnungen (15).

14. Herstellungsverfahren für eine Absorptionseinheit für kinetische Energie nach dem vorherigen Anspruch, **gekennzeichnet dadurch, dass** der Phase der Bildung der Längsvorsprünge (21) folgendes umfasst:
- Die Einführung einer Gegenform (32), die im wesentlichen zylindrisch ist, mit einer Reihe von Längsauskehlungen (33), in den zylindrischen Topf (31); und
- Die Verformung der Seitenwand (35) des zylindrischen Topfes (31) durch eine Reihe von Keilen (34), die außerhalb des zylindrischen Topfes (31) gelegen sind, gegenüber den Längsauskehlungen (33), wobei diese Keile (34) zu der Gegenform (32) hin vorrücken, um örtlich die Seitenwand (35) in den Auskehlungen (33) der Gegenform (32) zu versenken.

15. Herstellungsverfahren für eine Absorptionseinheit für kinetische Energie nach Anspruch 13 oder 14, **gekennzeichnet dadurch, dass** man gleichzeitig in der rohrförmigen Führungsmuffe (18) Schneidzähne in der Zuschneidphase des Bodens (37) des zylindrischen Topfes (31) bildet.
